# FASCICULE DE BREVET EUROPEEN

(11) **EP 3 658 416 B1**
(45) Date de publication et mention de la délivrance du brevet: **07.04.2021**
(21) Numéro de dépôt: 18752554.8
(22) Date de dépôt: 05.07.2018
(51) Int. Cl.: B60R 11/04

(54) **DISPOSITIF DE PRISE DE VUE ARRIÈRE POUR VÉHICULE AUTOMOBILE**
HINTERE BILDERFASSUNGSVORRICHTUNG FÜR EIN KRAFTFAHRZEUG
REAR IMAGE CAPTURING DEVICE FOR A MOTOR VEHICLE

(30) Priorité: 27.07.2017 FR 1757132
(43) Date de publication de la demande: 03.06.2020
(73) Titulaire: RENAULT s.a.s., 92100 Boulogne-Billancourt (FR)
(72) Inventeur: BUFFETAUD, Julien, 91320 WISSOUS (FR); CLAIN, Fabien, 78960 VOISINS LE BRETONNEUX (FR)
(86) Numéro de dépôt international: PCT/FR2018/051675
(87) Numéro de publication internationale: WO 2019/020890

(56) Documents cités:
- US-A1- 2016 065 796
- US-A1- 2016 243 988

## Description

L'invention concerne le domaine des rétroviseurs latéraux pour véhicule automobile, et plus particulièrement des dispositifs de vue arrière dotés d'une caméra.

Un dispositif de vue arrière incorporé sur un véhicule automobile a pour but de permettre au conducteur du véhicule automobile de surveiller l'environnement situé derrière le véhicule, tel que les véhicules et piétons évoluant derrière le véhicule.

Un exemple de dispositif de vue arrière classique incorporé sur des véhicules automobiles est un rétroviseur latéral. Un rétroviseur latéral est classiquement muni d'un miroir maintenu à l'extérieur d'une partie latérale d'un corps du véhicule automobile de sorte à refléter l'environnement arrière du véhicule. Afin d'éviter que le miroir ne subisse des chocs pouvant occasionner sa destruction, certains rétroviseurs latéraux sont équipés de moyens permettant de rabattre le miroir contre la partie latérale du corps de véhicule.

Par ailleurs, de tels rétroviseurs n'apportent pas toujours pleinement satisfaction, en particulier en raison d'un angle mort correspondant à une zone qui ne peut pas être surveillée par le conducteur.

Un autre type de dispositif de prise de vue arrière comprend une caméra située à la place du miroir et dirigée vers l'arrière du véhicule. Le dispositif de prise de vue arrière est associé à un écran affichant les images recueillies par la caméra. Un tel dispositif de prise de vue arrière est également connu sous la dénomination de dispositif de rétrovision. Un tel dispositif peut offrir au conducteur un champ de vision élargi de sorte à limiter l'angle mort. De tels dispositifs sont aussi souvent préférés car ils sont moins volumineux et nuisent moins à l'aérodynamisme du véhicule que des rétroviseurs classiques.

Toutefois, l'encombrement occasionné par la caméra et par les câbles qui lui sont associés rend difficile l'incorporation de moyens pour rabattre ladite caméra contre la partie latérale du corps de véhicule. Compte tenu du coût d'une caméra par rapport à celui d'un miroir, il serait toutefois souhaitable de pouvoir rabattre la caméra.

De même, bien qu'un dispositif de prise de vue arrière offre un champ de vision élargi, il est encore souhaitable de fournir des images différentes en fonction des différentes situations de fonctionnement du véhicule. Or, cela est compromis par la nécessité de limiter l'encombrement généré par le dispositif et par la nécessité d'assurer une bonne fixation au corps de véhicule

Le document US 2016/065796 A1 décrit un dispositif de prise de vue arrière pour véhicule automobile selon le préambule de la revendication 1 ainsi qu'un procédé de contrôle d'un tel dispositif dans lequel on contrôle le déplacement du boîtier mobile en translation en fonction d'une situation de fonctionnement du véhicule automobile, et que lorsqu'il est sélectionné un mode « stationné », le boîtier mobile est déplacé pour être le plus proche possible du véhicule, lorsqu'il est sélectionné un mode « situation normale de roulage », le boîtier mobile est déplacé pour être situé à une distance supérieure du véhicule et dans lequel il existe un mode « aide de stationnement ».

Au vu de ce qui précède, l'invention a pour but de fournir un dispositif de prise de vue arrière pour véhicule automobile permettant de rétracter la caméra et d'offrir au conducteur des images adaptées à différentes situations de fonctionnement du véhicule, tout en occasionnant un encombrement minimal et en assurant une fixation solide à une partie latérale de la carrosserie du véhicule automobile.

À cet effet, il est proposé un dispositif de prise de vue arrière pour véhicule automobile ayant les caractéristiques de la revendication 1.

Un tel dispositif permet une visualisation par le conducteur optimale de l'environnement arrière du véhicule en permettant de modifier l'orientation de la caméra. Par ailleurs, la caméra est rétractée en provoquant son déplacement en translation vers le corps de véhicule.

Avantageusement, ladite direction de déplacement est sensiblement perpendiculaire à une direction d'orientation de la caméra.

Le choix d'une telle direction de déplacement maximise la variation de l'orientation de la caméra. Il en résulte une encore meilleure visualisation par le conducteur.

Selon l'invention, il est prévu un moyen d'entraînement apte à entraîner le boîtier mobile en translation par rapport à la pièce d'attache selon ladite direction de déplacement, et un moyen de guidage configuré pour provoquer le déplacement du boîtier mobile par rapport à la pièce d'attache en rotation autour de ladite direction de déplacement en réponse à un déplacement du boîtier mobile par rapport à la pièce d'attache en translation selon ladite direction de déplacement.

Ainsi, l'orientation de la caméra est rendue modifiable et la caméra est rétractable grâce à un seul moyen d'entraînement.

Avantageusement, ledit moyen entraînement comprend un actionneur rotatif et un moyen de conversion de mouvement doté d'une vis sans fin et d'un écrou.

Dans un mode de réalisation, le boîtier mobile comprend un manchon cylindrique, la pièce d'attache comportant une excroissance cylindrique parallèle à ladite direction de déplacement, ledit manchon cylindrique s'étendant autour de l'excroissance cylindrique de sorte à réaliser une liaison mécanique entre le boîtier mobile et la pièce d'attache de type pivot glissant par rapport à ladite direction de déplacement.

La liaison mécanique ainsi réalisée est fiable et peu encombrante.

De préférence, l'écrou comprend un doigt radial, le boîtier mobile comportant une languette s'étendant selon la direction axiale du manchon cylindrique, ladite languette comprenant un orifice, ledit doigt étant inséré dans ledit orifice.

Avantageusement, l'excroissance cylindrique comprend une gorge s'étendant sur toute la longueur de la portion cylindrique par rapport à ladite direction de déplacement.

Une telle gorge permet de loger les câbles électriques associés à la caméra du dispositif de prise de vue arrière.

Dans un autre mode de réalisation, la pièce d'attache comporte un premier palier et un second palier coaxiaux par rapport à ladite direction de déplacement, la vis sans fin étant mécaniquement connectée à la pièce d'attache par l'intermédiaire desdits premier et second paliers, la longueur de l'excroissance cylindrique étant égale à la distance entre les premier et second paliers multipliée par un facteur compris entre 1,5 et 2,5.

Une telle liaison mécanique entre la pièce d'attache et la vis sans fin permet d'assurer la liaison mécanique entre le boîtier mobile et la pièce d'attache. En choisissant de telles dimensions, on limite l'encombrement généré par l'excroissance cylindrique tout en assurant un maintien solide du boîtier mobile par rapport à la pièce d'attache.

Dans un mode de réalisation, la pièce d'attache comprend une zone d'attache à une partie latérale d'un corps de véhicule automobile, ledit moyen de guidage comportant une rainure pratiquée dans une surface de la pièce d'attache, et un pion radial solidaire du boîtier mobile, ladite rainure comportant une portion proximale par rapport à la zone d'attache et une portion distale par rapport à la zone d'attache, la portion proximale étant rectiligne et dirigée selon la direction de déplacement, la portion distale étant oblique par rapport à ladite direction de déplacement.

Une telle rainure permet de provoquer une rotation du boîtier mobile lorsque celui-ci est placé pour être le plus éloigné possible de la partie latérale du corps de véhicule. On peut ainsi orienter la caméra vers le bas et à l'extérieur pour offrir au conducteur une visualisation la plus adaptée possible lorsque le véhicule automobile est en cours de stationnement.

Selon un autre aspect, il est proposé un procédé de contrôle d'un dispositif tel que défini précédemment, ledit dispositif étant incorporé dans un véhicule automobile, dans lequel on contrôle le déplacement du boîtier mobile en translation selon la direction de déplacement par rapport à la pièce d'attache en fonction d'une situation de fonctionnement du véhicule automobile, dans lequel :
- lorsqu'il est sélectionné un mode « stationné », le boîtier mobile est déplacé pour être le plus proche possible de la pièce d'attache,
- lorsqu'il est sélectionné un mode « situation normale de roulage », le boîtier mobile est déplacé pour être situé à une distance intermédiaire de la pièce d'attache, et
- lorsqu'il est sélectionné un mode « aide de stationnement », le boîtier mobile est déplacé pour être le plus éloigné possible de la pièce d'attache.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une représentation en perspective d'un dispositif de vision arrière selon un exemple de réalisation de l'invention,
- la figure 2 est une autre vue en perspective du dispositif de la figure 1, le boîtier étant dans une position rétractée,
- la figure 3 est une vue en perspective de la pièce d'attache du dispositif des figures 1 et 2,
- la figure 4 est une vue de détail d'une nervure de la pièce d'attache de la figure 3,
- la figure 5 est une vue en perspective d'un écrou du dispositif des figures 1 et 2,
- la figure 6 est une autre vue en perspective du dispositif de la figure 1, le boîtier étant dans une position intermédiaire, et
- la figure 7 est une autre vue en perspective du dispositif de la figure 1, le boîtier étant dans une position déployée.

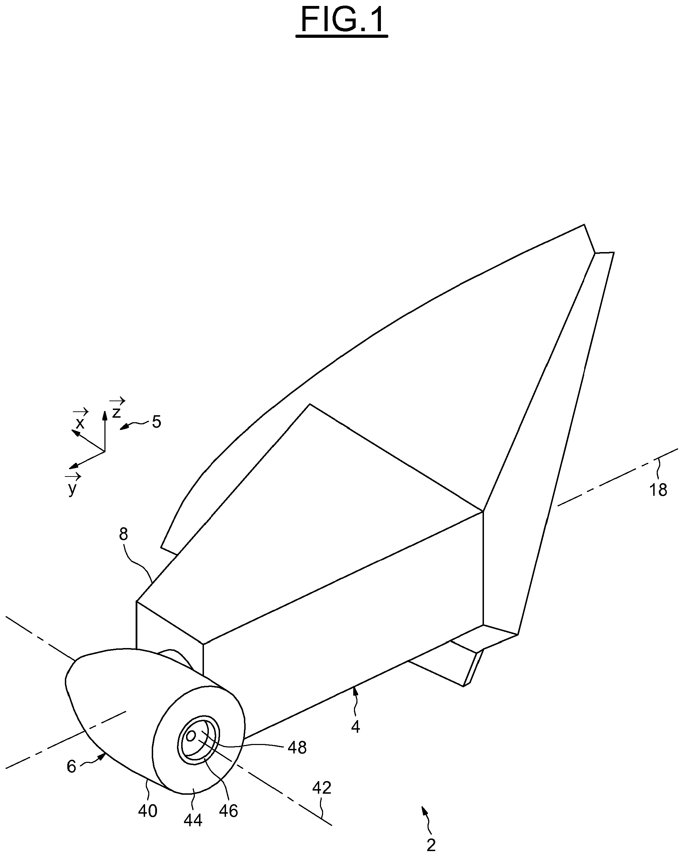

En référence à la figure 1, il est schématiquement représenté un dispositif de prise de vue arrière 2. Le dispositif 2 est destiné à être incorporé sur un véhicule automobile (non représenté). Plus précisément, le dispositif 2 est destiné à être incorporé à la place habituellement réservée à un rétroviseur latéral. Dans l'exemple illustré, le dispositif 2 est destiné à être incorporé sur une partie latérale gauche d'un corps de véhicule automobile. Toutefois, on ne sort bien évidemment pas du cadre de l'invention en envisageant un dispositif semblable adapté pour être incorporé sur un côté latéral droit du corps de véhicule.

Le dispositif 2 comporte notamment une pièce d'attache 4 et un boîtier mobile 6. On définit une base vectorielle orthonormale 5 attachée à la pièce 4. La base 5 est constituée d'un vecteur *̅x̅*̅, d'un vecteur *̅y̅*̅ et d'un vecteur *̅z̅*̅. Lorsque le dispositif 2 est incorporé sur une partie latérale de corps de véhicule, le vecteur *̅x̅*̅ est parallèle à un axe longitudinal du véhicule et orienté vers l'avant du véhicule, le vecteur *̅y̅*̅ est parallèle à un axe transversal du véhicule et orienté de droite à gauche par rapport au véhicule et le vecteur *̅z̅*̅ est parallèle à un axe vertical par rapport au véhicule et orienté vers le haut par rapport au véhicule.

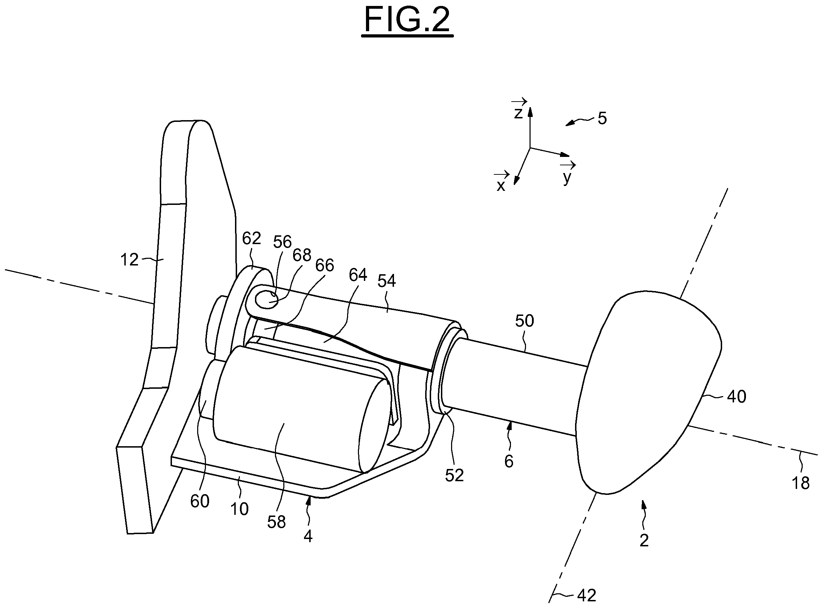

La pièce d'attache 4 comporte un couvercle 8 (visible sur la figure 1) recouvrant une platine 10 (visible sur la figure 2). La platine 10 est sensiblement perpendiculaire au vecteur *̅z̅*̅. Sur les figures 2, 6 et 7, le couvercle 8 a volontairement été omis pour permettre une meilleure visualisation des éléments constitutifs du dispositif 2.

En référence à la figure 2, la platine 10 comporte une zone d'attache 12. La zone d'attache est sensiblement plane et globalement perpendiculaire au vecteur *̅y̅*̅. La zone 12 est munie de moyens (non représentés) pour permettre l'attache de la pièce 4 à la partie latérale du corps de véhicule.

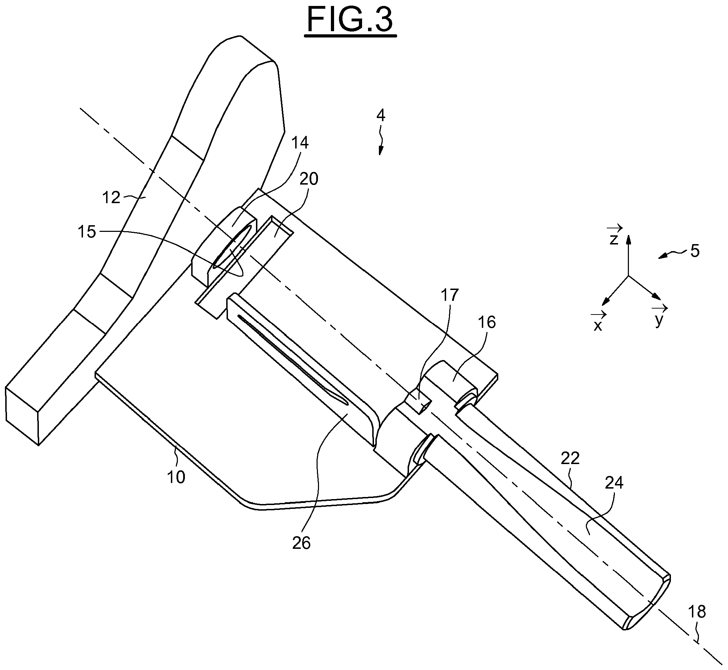

En référence aux figures 2 et 3, la platine 10 comporte un premier logement annulaire 14 et un second logement annulaire 16. Les logements 14 et 16 ont la forme d'une bague collée sur une face supérieure de la platine 10. Les logements 14 et 16 sont coaxiaux par rapport à un premier axe 18 dirigé selon la direction du vecteur *̅y̅*̅. La distance entre les logements 14 et 16 est notée l₁₄₁₆. Un premier palier 15 est reçu dans le logement 14. Un second palier 17 est reçu dans le logement 16. Les paliers 15 et 17 peuvent être du type à roulement ou à friction. La largeur l₁₆ selon la direction de l'axe 18 du logement 16 est plus importante que la largeur l₁₄ du logement 14. Les paliers 15 et 17 comprennent une bague extérieure encastrée dans les logements 14 et 16, respectivement.

En référence à la figure 3, la platine 10 comporte en outre un jour 20 pratiqué entre les logements 14 et 16, à proximité du logement 14. Les dimensions du jour 20 sont suffisantes pour permettre le passage de plusieurs câbles électriques. Le jour 20 a une forme sensiblement rectangulaire, ses grands côtés étant sensiblement parallèles au vecteur *̅x̅*̅.

Toujours en référence à la figure 3, la platine 10 comporte en outre une excroissance cylindrique 22 à base circulaire. L'excroissance 22 s'étend depuis une surface frontale du logement 16 selon la direction de l'axe 18 et dans le sens du vecteur *̅y̅*̅. Dans l'exemple illustré, la longueur de l'excroissance 22 selon la direction de l'axe 18 est notée l₂₂. Le diamètre extérieur de l'excroissance 22 est noté d₂₂.

L'excroissance 22 comporte une gorge intérieure 24. La gorge 24 s'étend selon la direction longitudinale de l'excroissance 22 et sur toute sa longueur. En d'autres termes, l'excroissance 24 s'étend depuis le logement 16 jusqu'à une extrémité axiale de l'excroissance 22 opposée au logement 16. La gorge 24 est communicante avec l'espace intérieur du palier 17.

La platine 10 comporte une nervure 26. Les logements 14 et 16 et le jour 20 sont situés en arrière de la nervure 26 par rapport à la direction et au sens du vecteur *̅x̅*̅. La nervure 26 forme un plan sensiblement perpendiculaire au vecteur *̅x̅*̅. La nervure 26 s'étend depuis la face supérieure de la platine 10 et se situe axialement entre le jour 20 et le logement 16. La longueur de la nervure 26 selon la direction du vecteur *̅y̅*̅ est notée l₂₆.

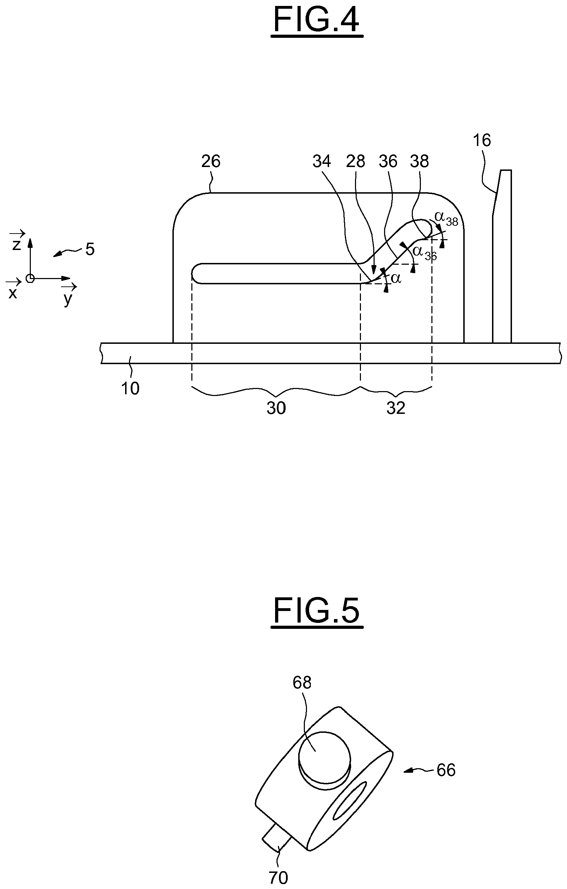

En référence à la figure 4, la nervure 26 comporte une rainure 28. La rainure 28 débouche de chaque côté de la surface formée par la nervure 26. La rainure 28 a une épaisseur e₂₈ sensiblement constante sur toute sa longueur.

Toujours en référence à la figure 4, la nervure 28 est constituée d'une première portion 30 et d'une deuxième portion 32. La première portion 30 est proche du logement 14 et la seconde portion 32 est proche du logement 16.

La première portion 30 de la nervure 28 est rectiligne et orientée selon la direction du vecteur *̅y̅*̅.

La seconde portion 32 de la rainure 18 est courbée et oblique par rapport à la direction du vecteur *̅y̅*̅. Plus précisément, la seconde portion 32 est divisée en une première sous-portion 34, une deuxième sous-portion 36 et une troisième sous-portion 38. L'angle α formé par la tangente à la nervure 28 par rapport à la direction du vecteur *̅y̅*̅ évolue différemment entre les sous-portions 32 à 36. Dans la sous-portion 34, l'angle α est sensiblement nul à proximité du raccordement avec la première portion 30 et augmente progressivement à mesure que l'on s'éloigne de la première portion 30 jusqu'à atteindre une première valeur limite α₃₆ au niveau du raccordement avec la sous-portion 36. Dans la sous-portion 36, l'angle α est sensiblement constant égal à l'angle α₃₆. Dans la sous-portion 38, l'angle α est sensiblement égal à α₃₆ à proximité du raccordement avec la sous-portion 36 et diminue progressivement à mesure que l'on s'éloigne de la sous-portion 36 jusqu'à atteindre une seconde valeur limite α₃₈ au niveau de l'extrémité opposée à la sous-portion 36. Dans l'exemple illustré, la valeur α₃₆ est comprise entre 50° et 60°, de préférence sensiblement égale à 54°, et la valeur α₃₈ est comprise entre 15° et 25°, de préférence sensiblement égale à 20°.

Comme cela sera expliqué par la suite, le boîtier 6 est capable de pivoter autour de l'axe 18 par rapport à la pièce 4. Le boîtier 6 comporte un corps de boîtier 40. Le corps de boîtier 40 a une forme axisymétrique autour d'un axe de symétrie 42. Plus précisément, le corps de boîtier 40 a sensiblement la forme d'un obus s'étendant depuis une surface de base 44. La surface 44 comporte un orifice circulaire 46 centré autour de l'axe 42.

À l'intérieur du corps de boîtier 40, on a disposé une caméra (non représentée) couplée à une lentille 48 incrustée dans l'orifice 46. De la sorte, la caméra est capable de recueillir des images perçues à travers la lentille 48. La direction d'orientation de la caméra, qui correspond à une direction centrale du champ de vision capté par la caméra, coïncide avec l'axe 42. Les câbles électriques alimentant la caméra en énergie électrique et transmettant les signaux échangés avec la caméra sont reliés au véhicule via la gorge 24 et le jour 20.

En référence à la figure 2, le boîtier 6 comporte un manchon cylindrique 50 à base circulaire. Le manchon 50 s'étend depuis une surface du corps 40 le long de l'axe 18. À une extrémité opposée au corps 40, le manchon 50 comporte une collerette externe d'extrémité 52. La longueur du manchon 50 selon la direction de l'axe 18 est notée l₅₀. Le diamètre extérieur de la base circulaire du manchon 50 est noté dₑ₅₀. Le manchon 50 est intérieurement délimité par une surface cylindrique à base circulaire de diamètre dᵢ₅₀.

Dans l'exemple illustré, le diamètre dᵢ₅₀ est sensiblement égal au diamètre d₂₂. L'excroissance cylindrique 22 est insérée à l'intérieur du manchon cylindrique 50. De ce fait, le manchon 50 et l'excroissance 22 sont connectés mécaniquement par une liaison mécanique de type pivot glissant par rapport à l'axe 18. En d'autres termes, le manchon 50 est capable de se déplacer par rapport à l'excroissance 22 en rotation autour de l'axe 18 et en translation selon la direction de l'axe 18.

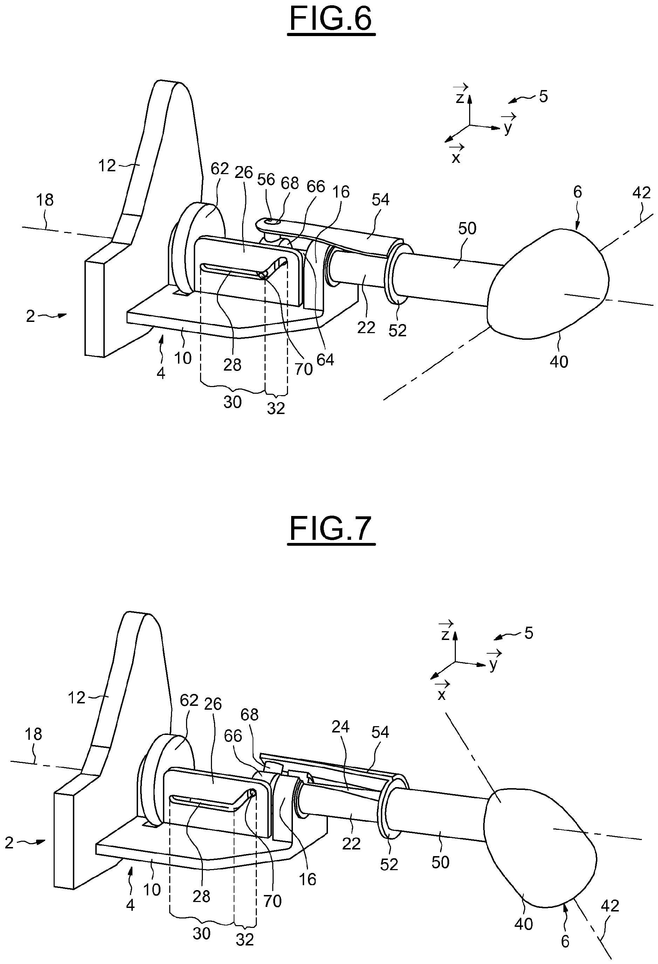

Le rapport entre les longueurs l₂₂ et l₁₄₁₆ conditionne le compromis entre la solidité de la fixation du boîtier 6 sur la pièce 4 et la limitation de l'encombrement occasionné par le dispositif 2. La longueur l₂₂ doit être strictement supérieure à la longueur l₁₄₁₆ pour que le boîtier 6 puisse être maintenu sur la pièce 4 dans la position déployée du dispositif 2 telle qu'illustrée sur la figure 7. Si la longueur l₂₂ est trop proche de la longueur l₁₄₁₆, la fixation du boîtier 6 sur la pièce 4 en position déployée du dispositif 2 est rendue trop fragile. A l'inverse, si la longueur l₂₂ est excessivement grande par rapport à la longueur l₁₄₁₆, l'envergure du dispositif 2 selon la direction du vecteur *̅y̅*̅ est augmentée et génère un encombrement inutile. Au vu de ce qui précède, un bon compromis est obtenu pour des valeurs de l₂₂ comprises entre 1,5 fois et 2,5 fois la longueur l₁₄₁₆.

Comme visible sur la figure 2, le boîtier 10 comporte une languette 54. La languette 54 s'étend depuis une surface extérieure de la collerette externe 52 selon la direction du vecteur *̅y̅*̅ et en sens opposé par rapport au vecteur *̅y̅*̅. Dans l'exemple illustré, la languette 54 est constituée par une portion de surface cylindrique à base circulaire autour de l'axe 18. À son extrémité opposée à la collerette externe 52, la languette 54 comporte un orifice 56. L'orifice 56 est radial par rapport à l'axe de cylindricité 18, débouchant de part et d'autre de la languette 54 et de diamètre d₅₆. La longueur l₅₄ selon la direction du vecteur *̅y̅*̅ est sensiblement égale à la somme des longueurs l₁₆ et l₁₄₁₆.

Toujours en référence à la figure 2, un moteur électrique 58 est disposé sur la platine 10. Le moteur 58 a volontairement été omis sur les figures 4, 6 et 7 dans un souci de clarification des dessins. Des câbles électriques (non représentés) associés au moteur 58 sont reliés au véhicule automobile via le jour 20. Contrairement aux autres éléments disposés sur la platine 10, le moteur électrique 58 est disposé en avant de la nervure 26 par rapport à la direction et au sens du vecteur *̅x̅*̅. La longueur l₅₈ du moteur électrique 58 étant plus réduite que la somme des longueurs l₁₄, l₁₆ et l₂₆, il en résulte la possibilité de réduire la longueur de la platine 10 et du couvercle 8 dans leur portion destinée à être orienté vers l'avant du véhicule. Il en résulte une forme plus aérodynamique du véhicule dans son ensemble.

Le moteur électrique 58 est capable d'entraîner en rotation un pignon 60. Le pignon 60 engrène une route dentée 62 solidaire d'une vis sans fin 64. La vis sans fin 64 est mécaniquement connectée à la pièce 4 par l'intermédiaire des paliers 15 et 17. De ce fait, la vis sans fin 64 est mobile en rotation par rapport à la pièce 4 autour de l'axe 18.

Un écrou 66 comprend une surface interne taraudée (non représentée) de pas égal au pas des filets externes de la vis sans fin 64. L'écrou 66 est vissé sur la vis sans fin 64.

L'écrou 66 comporte un doigt 68. Le doigt 68 est radial par rapport à l'axe 18. L'écrou 68 est cylindrique à base circulaire de diamètre d₆₈ sensiblement égal au diamètre d₅₆. Le doigt 68 de l'écrou 66 est inséré dans l'orifice 56.

L'écrou 66 comporte en outre un pion 70. Le pion 70 est radial par rapport à la direction de l'axe 18. Le pion 70 est cylindrique à base circulaire de diamètre d₇₀ légèrement inférieur à l'épaisseur e₂₈. De ce fait, le pion 70 peut être inséré dans la nervure 28.

On va maintenant décrire le fonctionnement du dispositif 2. Pour ce faire, on considère qu'initialement, le dispositif 2 est en position rétractée telle que représenté sur la figure 2. Dans cette position, le boîtier 6 est rétracté, c'est-à-dire situé au plus près de la pièce 4 et donc de la partie latérale de corps de véhicule automobile sur lequel est incorporé le dispositif 2.

Lorsque le véhicule automobile est en situation normale de roulage, le conducteur souhaite que le dispositif 2 fournisse des informations sur l'environnement arrière du véhicule tel que les autres véhicules évoluant derrière le véhicule. Par ailleurs, il est souhaitable que le dispositif 1 garde un déploiement limité de sorte à maintenir un aérodynamisme satisfaisant.

Pour ce faire, le moteur électrique 58 entraîne en rotation la vis sans fin 64 autour de l'axe 18 par l'intermédiaire du pignon 60 et de la route 62. Le mouvement de rotation de la vis sans fin 64 est transformé en un mouvement de translation de l'écrou 66 grâce au pion 70 et à la rainure 28 qui bloquent la rotation de l'écrou 66. La translation de l'écrou 66 a lieu par rapport à la direction et dans le sens du vecteur *̅y̅*̅. Cette translation est transmise au boîtier mobile 6 par l'intermédiaire du doigt 68 et de l'orifice 56. La rotation du moteur électrique 58 est arrêtée lorsque le pion 70 arrive au niveau de la jonction entre la première portion 30 et la deuxième portion 32 de la rainure 28. À ce stade, le dispositif 2 est dans la configuration intermédiaire telle qu'illustrée sur la figure 6.

Dans cette configuration intermédiaire, des informations relatives à l'environnement arrière du véhicule sont fournies au conducteur tout en évitant d'augmenter l'envergure entre deux dispositifs de prise de vue arrière situés de part et d'autre du véhicule et en limitant l'impact aérodynamique sur le véhicule.

Lorsque le véhicule automobile est sur le point d'être stationné, le conducteur souhaite que le dispositif 2 lui fournisse une aide au stationnement en permettant de visualiser l'environnement proche du véhicule tel que les pare-chocs de véhicules adjacents et un trottoir situé en regard d'un bas de caisse du véhicule.

Pour ce faire, le moteur électrique 58 entraîne encore la vis sans fin 64 en rotation autour de l'axe 18. Du fait de la nervure 28 oblique par rapport à la direction du vecteur *̅y̅*̅, cette rotation de la vis sans fin 64 est partiellement transformée en un mouvement de translation de l'écrou 66 le long de la direction du vecteur *̅y̅*̅ et partiellement transformée en un mouvement de rotation de l'écrou 66 autour de l'axe 18. La rotation du moteur électrique 58 est arrêtée lorsque le pion 70 arrive à l'extrémité de la sous-portion 38 de la rainure 28. À ce stade, le dispositif 2 est dans la configuration déployée telle qu'illustrée sur la figure 7.

Dans cette configuration déployée, des informations relatives à l'environnement proche du véhicule sont fournies au conducteur. En particulier, la vision est améliorée du fait que la caméra est éloignée du corps de véhicule. Par ailleurs, la visualisation de l'environnement proche des bas de caisse du véhicule est améliorée du fait de la rotation subie par la caméra.

Les exemples et plages de valeurs de α₃₆ et α₃₈ présentés en référence à ce mode de réalisation sont avantageux en ce qu'ils permettent un ajustement maximal de l'orientation de la caméra tout en assurant la rigidité du support 10 et la continuité du câblage à l'intérieur de l'excroissance 22.

En actionnant les mouvements inverses, c'est-à-dire lorsque le moteur électrique 58 tourne en sens inverse, on rapproche le corps 40 de la pièce 4, de sorte qu'on peut passer de la configuration déployée (figure 7), à la configuration intermédiaire (figure 6), puis à la configuration rétractée (figure 2).

Au vu de ce qui précède, lorsqu'il est incorporé sur un véhicule automobile, le dispositif selon l'invention fournit au conducteur une visualisation adaptée à différentes situations de fonctionnement du véhicule automobile, tout en permettant une rétractation de la caméra lorsque le véhicule est stationné. Cette adaptation est mise en œuvre grâce à l'utilisation d'un seul actionneur, en l'espèce un moteur électrique. Il en résulte la possibilité de fixer solidement le dispositif 2 à une partie latérale de corps de véhicule automobile sans occasionner un encombrement excessif qui pourrait diminuer le champ de vision du conducteur sur les côtés et nuire à l'aérodynamisme du véhicule.

## Revendications

1. Dispositif de prise de vue arrière (2) pour véhicule automobile comprenant une pièce d'attache (4) destinée à être attachée à une partie latérale d'un corps de véhicule automobile, un boîtier mobile (6) et une caméra incorporée à l'intérieur du boîtier mobile (6), le boîtier mobile (6) étant apte à se déplacer par rapport à la pièce d'attache (4) en translation selon une direction de déplacement (*̅y̅*̅) et à se déplacer par rapport à la pièce d'attache (4) en rotation autour de ladite direction de déplacement (y̅), le dispositif comprenant en outre un moyen d'entraînement apte à entraîner le boîtier mobile (6) en translation par rapport à la pièce d'attache (4) selon ladite direction de déplacement (y̅), **caractérisé en ce que** le dispositif comprend un moyen de guidage configuré pour provoquer le déplacement du boîtier mobile (6) par rapport à la pièce d'attache (4) en rotation autour de ladite direction de déplacement (*̅y̅*̅) en réponse à un déplacement du boîtier mobile (6) par rapport à la pièce d'attache (4) en translation selon ladite direction de déplacement (*̅y̅*̅).

2. Dispositif (2) selon la revendication 1, dans lequel ladite direction de déplacement (*̅y̅*̅) est sensiblement perpendiculaire à une direction d'orientation (42) de la caméra.

3. Dispositif (2) selon l'une quelconque des revendications précédentes, dans lequel ledit moyen d'entraînement comprend un actionneur rotatif (58) et un moyen de conversion de mouvement doté d'une vis sans fin (64) et d'un écrou (66).

4. Dispositif (2) selon la revendication 3, dans lequel le boîtier mobile (6) comprend un manchon cylindrique (50), la pièce d'attache (4) comportant une excroissance cylindrique (22) parallèle à ladite direction de déplacement (y̅), ledit manchon cylindrique (50) s'étendant autour de l'excroissance cylindrique (22) de sorte à réaliser une liaison mécanique entre le boîtier mobile (6) et la pièce d'attache (4) de type pivot glissant par rapport à ladite direction de déplacement (y̅).

5. Dispositif (2) selon la revendication 4, dans lequel l'écrou (66) comprend un doigt radial (68), le boîtier mobile (6) comportant une languette (54) s'étendant selon la direction axiale du manchon cylindrique (50), ladite languette (54) comprenant un orifice (56), ledit doigt (68) étant inséré dans ledit orifice (56).

6. Dispositif (2) selon la revendication 4 ou 5, dans lequel l'excroissance cylindrique (22) comprend une gorge (24) s'étendant sur toute la longueur de la portion cylindrique (22) par rapport à ladite direction de déplacement (*̅y̅*̅).

7. Dispositif (2) selon l'une quelconque des revendications 3 à 6, dans lequel la pièce d'attache (4) comporte un premier palier (14) et un second palier (16) coaxiaux par rapport à ladite direction de déplacement (y̅), la vis sans fin (64) étant mécaniquement connectée à la pièce d'attache (4) par l'intermédiaire desdits premier et second paliers (14, 16), la longueur (l₂₂) de l'excroissance cylindrique (22) étant égale à la distance (l₁₄₁₆) entre les premier et second paliers (14, 16) multipliée par un facteur compris entre 1,5 et 2,5.

8. Dispositif (2) selon l'une quelconque des revendications précédentes, dans lequel la pièce d'attache (4) comprend une zone d'attache (12) à une partie latérale d'un corps de véhicule automobile, ledit moyen de guidage comportant une rainure (28) pratiquée dans une surface de la pièce d'attache (4), et un pion radial (70) solidaire du boîtier mobile (6), ladite rainure (28) comportant une portion proximale (30) par rapport à la zone d'attache (12) et une portion distale (32) par rapport à la zone d'attache (12), la portion proximale (30) étant rectiligne et dirigée selon la direction de déplacement (*̅y̅*̅), la portion distale (32) étant oblique par rapport à ladite direction de déplacement (*̅y̅*̅).

9. Procédé de contrôle d'un dispositif (2) selon l'une quelconque des revendications 1 à 8, ledit dispositif (2) étant incorporé dans un véhicule automobile, dans lequel on contrôle le déplacement du boîtier mobile (6) en translation selon la direction de déplacement (*̅y̅*̅) par rapport à la pièce d'attache (4) en fonction d'une situation de fonctionnement du véhicule automobile, et dans lequel :
- lorsqu'il est sélectionné un mode « stationné », le boîtier mobile (6) est déplacé pour être le plus proche possible de la pièce d'attache (4),
- lorsqu'il est sélectionné un mode « situation normale de roulage », le boîtier mobile (6) est déplacé pour être situé à une distance intermédiaire de la pièce d'attache (4), et
- lorsqu'il est sélectionné un mode « aide de stationnement », le boîtier mobile (6) est déplacé pour être le plus éloigné possible de la pièce d'attache (4).

## Patentansprüche

1. Hintere Bilderfassungsvorrichtung (2) für ein Kraftfahrzeug, umfassend ein Befestigungsteil (4), das dazu bestimmt ist, an einem seitlichen Teil eines Körpers des Kraftfahrzeugs befestigt zu sein, ein bewegliches Gehäuse (6) und eine im Inneren des beweglichen Gehäuses (6) eingebaute Kamera, wobei das bewegliche Gehäuse (6) in der Lage ist, sich relativ zum Befestigungsteil (4) translatorisch in einer Bewegungsrichtung (*̅y̅*̅) zu bewegen und sich relativ zum Befestigungsteil (4) rotatorisch um die Bewegungsrichtung (*̅y̅*̅) herum bewegen, wobei die Vorrichtung ferner ein Antriebsmittel umfasst, das in der Lage ist, das bewegliche Gehäuse (6) translatorisch relativ zum Befestigungsteil (4) in der Bewegungsrichtung (*̅y̅*̅) anzutreiben, **dadurch gekennzeichnet, dass** die Vorrichtung ein Führungsmittel umfasst, das konfiguriert ist, um die rotatorische Bewegung des beweglichen Gehäuses (6) relativ zum Befestigungsteil (4) um die Bewegungsrichtung (*̅y̅*̅) herum in Reaktion auf eine translatorische Bewegung des beweglichen Gehäuses (6) relativ zum Befestigungsteil (4) in der Bewegungsrichtung (*̅y̅*̅) zu bewirken.

2. Vorrichtung (2) nach Anspruch 1, wobei die Bewegungsrichtung (*̅y̅*̅) im Wesentlichen senkrecht zu einer Orientierungsrichtung (42) der Kamera ist.

3. Vorrichtung (2) nach einem der vorangehenden Ansprüche, wobei das Antriebsmittel einen Drehantrieb (58) und ein Bewegungsumwandlungsmittel, das mit einer Schnecke (64) und einer Mutter (66) ausgestattet ist, umfasst.

4. Vorrichtung (2) nach Anspruch 3, wobei das bewegliche Gehäuse (6) eine zylindrische Hülse (50) umfasst, wobei das Befestigungsteil (4) einen zur Bewegungsrichtung (*̅y̅*̅) parallelen zylindrischen Vorsprung (22) aufweist, wobei sich die zylindrische Hülse (50) um den zylindrischen Vorsprung (22) herum erstreckt, um eine mechanische Verbindung zwischen dem beweglichen Gehäuse (6) und dem Befestigungsteil (4) vom Typ eines relativ zur Bewegungsrichtung (*̅y̅*̅) gleitenden Drehzapfens herzustellen.

5. Vorrichtung (2) nach Anspruch 4, wobei die Mutter (66) einen radialen Finger (68) umfasst, wobei das bewegliche Gehäuse (6) eine Zunge (54) aufweist, die sich in der axialen Richtung der zylindrischen Hülse (50) erstreckt, wobei die Zunge (54) eine Öffnung (56) umfasst, wobei der Finger (68) in die Öffnung (56) eingesetzt ist.

6. Vorrichtung (2) nach Anspruch 4 oder 5, wobei der zylindrische Vorsprung (22) eine Kehle (24) umfasst, die sich über die gesamte Länge des zylindrischen Abschnitts (22) relativ zur Bewegungsrichtung (*̅y̅*̅) erstreckt.

7. Vorrichtung (2) nach einem der Ansprüche 3 bis 6, wobei das Befestigungsteil (4) ein erstes Lager (14) und ein zweites Lager (16) umfasst, die koaxial zur Bewegungsrichtung (*̅y̅*̅) sind, wobei die Schnecke (64) über das erste und das zweite Lager (14, 16) mechanisch mit dem Befestigungsteil (4) verbunden ist, wobei die Länge (l₂₂) des zylindrischen Vorsprungs (22) gleich dem Abstand (l₁₄₁₆) zwischen dem ersten und dem zweiten Lager (14, 16) multipliziert mit einem Faktor zwischen 1,5 und 2,5 ist.

8. Vorrichtung (2) nach einem der vorangehenden Ansprüche, wobei das Befestigungsteil (4) einen Bereich (12) zur Befestigung an einem seitlichen Teil eines Körpers des Kraftfahrzeugs umfasst, wobei das Führungsmittel eine in einer Fläche des Befestigungsteils (4) ausgeführte Rille (28) und einen fest mit dem beweglichen Gehäuse (6) verbundenen radialen Stift (70) aufweist, wobei die Rille (28) einen relativ zum Befestigungsbereich (12) proximalen Abschnitt (30) und einen relativ zum Befestigungsbereich (12) distalen Abschnitt (32) aufweist, wobei der proximale Abschnitt (30) geradlinig und in der Bewegungsrichtung (*̅y̅*̅) ausgerichtet ist, wobei der distale Abschnitt (32) relativ zur Bewegungsrichtung (*̅y̅*̅) schräg ist.

9. Verfahren zum Steuern einer Vorrichtung (2) nach einem der Ansprüche 1 bis 8, wobei die Vorrichtung (2) in ein Kraftfahrzeug eingebaut ist, wobei die translatorische Bewegung des beweglichen Gehäuses (6) in der Bewegungsrichtung (*̅y̅*̅) relativ zum Befestigungsteil (4) in Abhängigkeit von einer Betriebssituation des Kraftfahrzeugs gesteuert wird, und wobei:
- wenn ein "Parkmodus" ausgewählt ist, das bewegliche Gehäuse (6) so bewegt wird, dass es dem Befestigungsteil (4) so nah wie möglich ist,
- wenn ein "normaler Fahrmodus" ausgewählt ist, das bewegliche Gehäuse (6) so bewegt wird, dass es sich in einem Zwischenabstand zum Befestigungsteil (4) befindet, und
- wenn ein "Einparkhilfemodus" ausgewählt ist, das bewegliche Gehäuse (6) so bewegt wird, dass es so weit wie möglich vom Befestigungsteil (4) entfernt ist.

## Claims

1. Rear image capturing device (2) for a motor vehicle, comprising a fastening part (4) intended to be fastened to a lateral part of a motor vehicle body, a movable casing (6) and a camera incorporated inside the casing (6), the movable casing (6) being able to move in translation in a direction of movement (*̅y̅*̅) with respect to the fastening part (4) and to move in rotation about said direction of movement (*̅y̅*̅) with respect to the fastening part (4), also comprising a drive means that is able to drive the movable casing (6) in translation in said direction of movement (*̅y̅*̅) with respect to the fastening part (4), **characterized in that** the device comprises a guide means configured to cause the movable casing (6) to move in rotation about said direction of movement (*̅y̅*̅) with respect to the fastening part (4) in response to a movement of the movable casing (6) in translation in said direction of movement (*̅y̅*̅) with respect to the fastening part (4).

2. Device (2) according to Claim 1, wherein said direction of movement (*̅y̅*̅) is substantially perpendicular to a direction of orientation (42) of the camera.

3. Device (2) according to either one of the preceding claims, wherein said drive means comprises a rotary actuator (58) and a movement conversion means provided with an endless screw (64) and a nut (66).

4. Device (2) according to Claim 3, wherein the movable casing (6) comprises a cylindrical sleeve (50), the fastening part (4) having a cylindrical protuberance (22) parallel to said direction of movement (*̅y̅*̅), said cylindrical sleeve (50) extending about the cylindrical protuberance (22) so as to form a mechanical connection between the movable casing (6) and the fastening part (4) of the sliding pivot type with respect to said direction of movement (*̅y̅*̅).

5. Device (2) according to Claim 4, wherein the nut (66) comprises a radial finger (68), the movable casing (6) having a tongue (54) extending in the axial direction of the cylindrical sleeve (50), said tongue (54) comprising an orifice (56), said finger (68) being inserted into said orifice (56).

6. Device (2) according to Claim 4 or 5, wherein the cylindrical protuberance (22) comprises a groove (24) extending along the entire length of the cylindrical portion (22) with respect to said direction of movement (*̅y̅*̅).

7. Device (2) according to any one of Claims 3 to 6, wherein the fastening part (4) has a first bearing (14) and a second bearing (16) that are coaxial with said direction of movement (*̅y̅*̅), the endless screw (64) is mechanically connected to the fastening part (4) by way of said first and second bearings (14, 16), the length (l₂₂) of the cylindrical protuberance (22) being equal to the distance (l₁₄₁₆) between the first and second bearings (14, 16) multiplied by a factor of between 1.5 and 2.5.

8. Device (2) according to any one of the preceding claims wherein the fastening part (4) comprises a region (12) for fastening to a lateral part of a motor vehicle body, said guide means having a slot (28) made in a surface of the fastening part (4), and a radial pin (70) secured to the movable casing (6), said slot (28) having a proximal portion (30) with respect to the fastening regions (12) and a distal portion (32) with respect to the fastening region (12), the proximal portion (30) being rectilinear and directed in the direction of movement (*̅y̅*̅), the distal portion (32) being oblique with respect to said direction of movement (*̅y̅*̅).

9. Method for controlling a device (2) according to any one of Claims 1 to 8, said device (2) being incorporated in a motor vehicle, wherein the movement of the movable casing (6) in translation in the direction of movement (*̅y̅*̅) with respect to the fastening part (4) is controlled depending on an operating situation of the motor vehicle, and wherein:
- when a "parked" mode is selected, the movable casing (6) is moved so as to be as close as possible to the fastening part (4),
- when a "normal driving situation" is selected, the movable casing (6) is moved so as to be situated at an intermediate distance from the fastening part (4), and
- when a "parking assist" mode is selected, the movable casing (6) is moved so as to be as far away as possible from the fastening part (4).
